(19) Europäisches Patentamt / European Patent Office / Office européen des brevets

(11) **EP 3 128 466 A1**

(12) **EUROPEAN PATENT APPLICATION**

(43) Date of publication:
08.02.2017 Bulletin 2017/06

(51) Int Cl.:
*G06Q 10/00* (2012.01)     *G06Q 10/04* (2012.01)
*G06Q 10/06* (2012.01)

(21) Application number: 15201799.2

(22) Date of filing: 21.12.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 05.08.2015 IN 4067CH2015
21.09.2015 US 201514859506

(71) Applicant: Wipro Limited
560 035 Karnataka (IN)

(72) Inventors:
• GURUSWAMAPPA, Shivamurthy Harave
571128 Karnataka (IN)
• BALASUBRAMANIAN, Ramkumar
560061 Karnataka (IN)
• RYALI, Premchand
560076 Karnataka (IN)

(74) Representative: Finnegan Europe LLP
16 Old Bailey
London EC4M 7EG (GB)

(54) **SYSTEM AND METHOD FOR PREDICTING AN EVENT IN AN INFORMATION TECHNOLOGY INFRASTRUCTURE**

(57) System and method for predicting an event in an information technology infrastructure are disclosed. In one embodiment, the method comprises obtaining unstructured input data from a SCK database and deriving a seasonality activation function and a capacity activation function by analyzing the unstructured input data. The method further comprises converting the unstructured input data into at least one time series data comprising a plurality of data points. Each of the plurality of data points is separated by a predefined time interval. The method further comprises calculating a moving average for each of the plurality data points and calculating a weighted moving average by aggregating the moving average calculated for each of the plurality of data points based on a predetermined weight. The method further comprises predicting occurrence of the event based on the weighted moving average, the seasonality activation function, and the capacity activation function.

Figure 4

**Description**

## TECHNICAL FIELD

This disclosure relates generally to information technology (IT) infrastructure and more particularly to a system and a method for predicting an event in an IT infrastructure.

## BACKGROUND

Improved efficiency, transparency, and ease of operations have driven the digitization growth in almost every aspect of tasks in business. As industries started moving to information technology (IT), large and complex IT infrastructures have evolved to meet the enormous and varying demands. Any business in any industry like, IT and Banking services, Healthcare, Financial Services , Insurance, Pharmaceuticals, Media, and Telecom now deploy heavy IT infrastructures to support and run their businesses smoothly and efficiently. An IT infrastructure may be defined as a combined set of IT related components, such as hardware, software, and networks. This combined set of IT components helps in performing various operations to provide IT services. The operations may include developing, testing, delivering, monitoring, controlling, and supporting IT services.

While performing such operations, the IT infrastructure may encounter some issues/errors which affects functioning of the IT infrastructure. These issues are tagged with reasons causing the issues and are referred to as events in the IT infrastructure. In an example, events may be broadly classified into three categories: events related to capacity of infrastructures, such as memory utilization and CPU utilization; events related to software/applications infrastructures, such as auto system scheduler issue, database refresh failed, and long running query issue; and events related to hardware faults, such as port issue and local area network (LAN) issue. In most of the scenarios where IT infrastructure is deployed, successful running of the business is dependent on the availability and error free functioning of the IT infrastructure. Hence, it has become critical now not only to resolve an issue or event in real-time but also to predict an occurrence of any such event so that its negative impact on the business could be mitigated.

## SUMMARY

In one embodiment, a method for predicting occurrence of an event in an IT infrastructure is disclosed. The method comprises obtaining unstructured input data from a semantic and contextual knowledge (SCK) database. The method further comprises deriving a seasonality activation function and a capacity activation function by analyzing the unstructured input data. The method further comprises calculating a moving average for each of the plurality data points associated with each of the at least one time series data with the predefined time interval. The method further comprises calculating a weighted moving average by aggregating the moving average calculated for each of the plurality of data points based on a predetermined weight. The predetermined weight is associated with each of the plurality of data points. The method further comprises calculating a moving average for each of the plurality data points associated with each of the at least one time series data with the predefined time interval. The method further comprises calculating a weighted moving average by aggregating the moving average calculated for each of the plurality of data points based on a predetermined weight. The predetermined weight is associated with each of the plurality of data points. The method further comprises predicting occurrence of the event based on the weighted moving average, the seasonality activation function, and the capacity activation function.

In another embodiment, a system for predicting occurrence of an event in an IT infrastructure is disclosed. The system includes at least one processors and a computer-readable medium. The computer-readable medium stores instructions that, when executed by the at least one processor, cause the at least one processor to perform operations comprising obtaining unstructured input data from a semantic and contextual knowledge (SCK) database. The operations further comprise deriving a seasonality activation function and a capacity activation function by analyzing the unstructured input data. The operations further comprise calculating a moving average for each of the plurality data points associated with each of the at least one time series data with the predefined time interval. The operations further comprise calculating a weighted moving average by aggregating the moving average calculated for each of the plurality of data points based on a predetermined weight. The predetermined weight is associated with each of the plurality of data points. The operations further comprise calculating a weighted moving average by aggregating the moving average calculated for each of the plurality of data points based on a predetermined weight. The predetermined weight is associated with each of the plurality of data points. The operations further comprise predicting occurrence of the event based on the weighted moving average, the seasonality activation function, and the capacity activation function.

In another embodiment, a non-transitory computer-readable storage medium for predicting occurrence of an event in an IT infrastructure is disclosed, which when executed by a computing device, cause the computing device to perform operations comprising obtaining unstructured input data from a semantic and contextual knowledge (SCK) database. The operations further comprise deriving a seasonality activation function and a capacity activation function by analyzing the unstructured input data. The operations further comprise calculating a moving average for each of the plurality data points associated with each of the at least one time series data with the predefined time interval. The operations further comprise calculating a weighted moving average by aggregating the moving average calculated for each of the plurality of data points based on a predetermined weight. The predetermined weight is associated with each of the plurality of data points. The operations further comprise calculating a weighted moving average by aggregating the moving average calculated for each of the plurality of data points based on a predetermined weight. The predetermined weight is associated with each of the plurality of data points. The operations further comprise predicting occurrence of the event based on the weighted moving average, the seasonality activation function, and the capacity activation function.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles.

Figure 1 illustrates an exemplary network implementation comprising an events prediction system, in accordance with some embodiments of the present disclosure.
Figure 2 illustrates exemplary constituents of a knowledge base, in accordance with some embodiments of the present disclosure.
Figures 3(a) and 3(b) illustrate exemplary dashboards generated by the events prediction system, in accordance with some embodiments of the present disclosure.
Figure 4 illustrates an exemplary method for predicting occurrence of an event in an IT infrastructure, in accordance with some embodiments of the present disclosure.
Figure 5 illustrates an exemplary method for updating the knowledge base, in accordance with some embodiments of the present disclosure.
Figure 6 illustrates an exemplary method for converting unstructured data into a plurality of time series data, in accordance with some embodiments of the present disclosure.
Figure 7 is a block diagram of an exemplary computer system for implementing embodiments consistent with the present disclosure.

## DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

The present subject matter discloses systems and methods for predicting occurrence of an event in an IT infrastructure. The systems and methods may be implemented in a variety of computing systems. The computing systems that can implement the described method(s) include, but are not limited to a server, a desktop personal computer, a notebook or a portable computer, hand-held devices, and a mainframe computer. Although the description herein is with reference to certain computing systems, the systems and methods may be implemented in other computing systems, albeit with a few variations, as will be understood by a person skilled in the art.

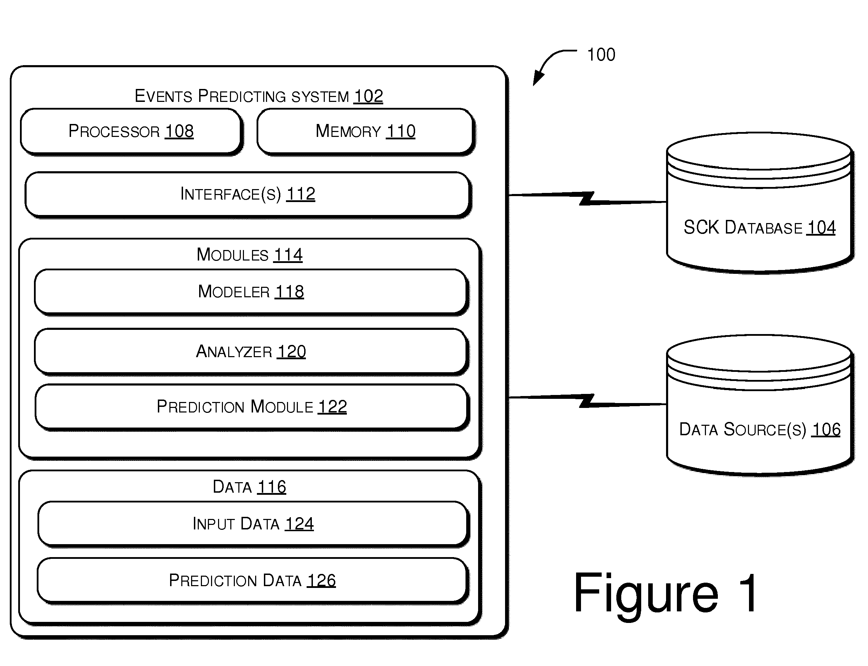

Working of the systems and methods for predicting occurrence of an event in an IT infrastructure is described in conjunction with Figures 1-7. It should be noted that the description and drawings merely illustrate the principles of the present subject matter. It will thus be appreciated that those skilled in the art will be able to devise various arrangements that, although not explicitly described or shown herein, embody the principles of the present subject matter and are included within its scope. Furthermore, all examples recited herein are principally intended expressly to be only for pedagogical purposes to aid the reader in understanding the principles of the present subject matter and are to be construed as being without limitation to such specifically recited examples and conditions. Moreover, all statements herein reciting principles, aspects, and embodiments of the present subject matter, as well as specific examples thereof, are intended to encompass equivalents thereof. While aspects of the systems and methods can be implemented in any number of different computing systems environments, and/or configurations, the embodiments are described in the context of the following exemplary system architecture(s).

Figure 1 illustrates an exemplary network environment 100 comprising an events predicting system 102, in accordance with some embodiments of the present disclosure. As shown in Figure 1, the events prediction system 102 is communicatively coupled to a semantic and contextual knowledge (SCK) database 104 and data source(s) 106. Although the SCK database 104 is shown external to the events prediction system 102 in Figure 1, it may be noted that, in one implementation, the SCK database 104 may be present within the events prediction system 102. Hereinafter, the events prediction system 102 may be interchangeably referred to as system 102.

The system 102 may be implemented on variety of computing systems. Examples of the computing systems may include a laptop computer, a desktop computer, a tablet, a notebook, a workstation, a mainframe computer, a server, a network server, and the like.

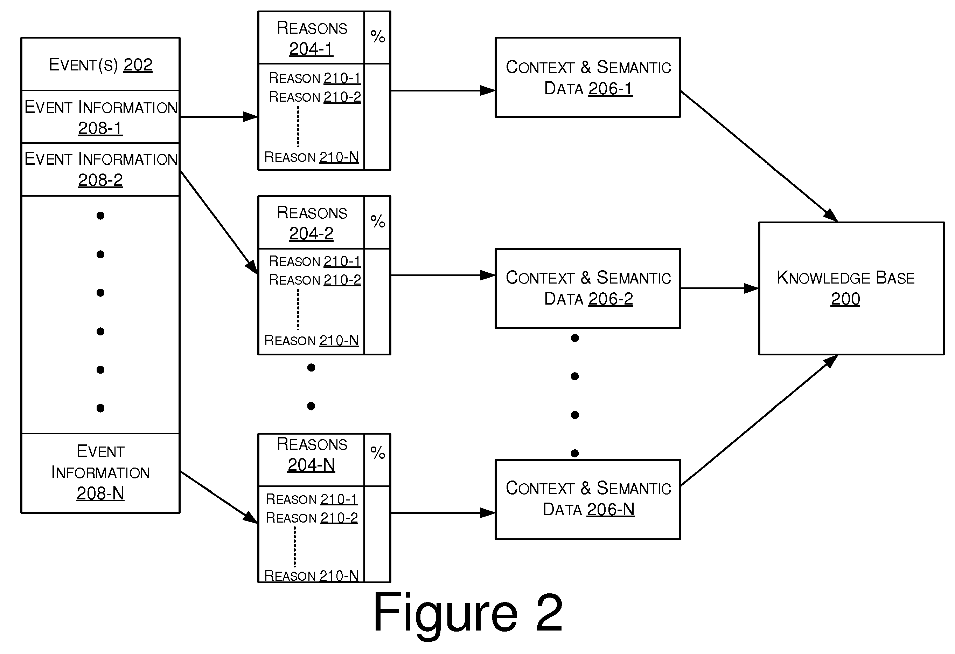

The SCK database 104 may comprise events and reasons that caused the events, semantic and contextual data pertaining to the events and reasons, and a knowledge base created based on the aforementioned information. Constituents of the SCK database 104 are discussed in conjunction with Figure 2. The data source(s) 106 comprise raw data obtained from various components of the IT infrastructure. The raw data is generally reside in the data source(s) 106 in an unstructured form.

The system 102 may be communicatively coupled to the SCK database 104 and data source(s) 106 through a network. The network may be a wireless network, wired network or a combination thereof. The network can be implemented as one of the different types of networks, such as intranet, local area network (LAN), wide area network (WAN), the internet, and such. The network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the network may include a variety of network devices, including routers, bridges, servers, computing devices, storage devices, etc.

As shown in Figure 1, the system 102 comprises a processor 108, a memory 110 coupled to the processor 108, and interface(s) 112. The processor 108 may be implemented as one or more microprocessors, microcomputers, microcontrollers, digital signal processors, central processing units, state machines, logic circuitries, and/or any devices that manipulate signals based on operational instructions. Among other capabilities, the processor 108 is configured to fetch and execute computer-readable instructions stored in the memory 110. The memory 110 can include any non-transitory computer-readable medium known in the art including, for example, volatile memory (e.g., RAM), and/or non-volatile memory (e.g., EPROM, flash memory, etc.).

The interface(s) 112 may include a variety of software and hardware interfaces, for example, a web interface, a graphical user interface, etc., allowing the system 102 to interact with user devices. Further, the interface(s) 112 may enable the system 102 respectively to communicate with other computing devices. The interface(s) 112 can facilitate multiple communications within a wide variety of networks and protocol types, including wired networks, for example LAN, cable, etc., and wireless networks such as WLAN, cellular, or satellite. The interface(s) 112 may include one or more ports for connecting a number of devices to each other or to another server.

In one example, the system 102 includes modules 114 and data 116. In one embodiment, the modules 114 and the data 116 may be stored within the memory 110. In one example, the modules 114, amongst other things, include routines, programs, objects, components, and data structures, which perform particular tasks or implement particular abstract data types. The modules 114 and may also be implemented as, signal processor(s), state machine(s), logic circuitries, and/or any other device or component that manipulate signals based on operational instructions. Further, the modules 114 can be implemented by one or more hardware components, by computer-readable instructions executed by a processing unit, or by a combination thereof.

In one implementation, the modules 114 further include a modeler 118, an analyzer 120, and a prediction module 122. In an example, the modules 114 may also comprises other modules. The other modules may perform various miscellaneous functionalities of the system 102. It will be appreciated that such aforementioned modules may be represented as a single module or a combination of different modules.

In one example, the data 116 serves, amongst other things, as a repository for storing data fetched, processed, received and generated by one or more of the modules 114. In one implementation, the data 116 may include input data 124 and prediction data 126. In one embodiment, the data 116 may be stored in the memory 110 in the form of various data structures. Additionally, the aforementioned data can be organized using data models, such as relational or hierarchical data models. In an example, the data 116 may also comprises other data used to store data, including temporary data and temporary files, generated by the modules 114 for performing the various functions of the system 102.

In operations, in order to predict events in the IT infrastructure, the modeler 118 may obtain unstructured input data from the SCK database 104. In the IT infrastructure, the events may be understood as issues/errors that may arise while performing operation to provide IT services. In an example, events may be associated with additional details, such an event time indicating when that particular event happened and reasons that caused the event.

The unstructured input data may include information generated by the IT infrastructure while providing the IT services. In an example, the unstructured input data may include at least one event associated with an event time, reasons for each of the at least one event, a percentage indicating how many times a particular reason has caused a particular event, number of reasons that have caused an event where the event is associated with more than one reason, or capacity of devices and/or applications that participated in an event. As the name suggest, the unstructured data is in unstructured form and stored in random order in tables of the SCK database 104. In an example, the modeler 118 may store raw data received from the IT infrastructure in the input data 124. In such cases, as shown in Figure 1, the unstructured input data is extracted from the input data 124 present within the system 102.

In an implementation, the modeler 118 may aggregate the information received from the IT infrastructure and create the SCK database 104 with the information. In an example, the modeler 118 may create the SCK database 104 by aggregating the events, reasons causing the events, contextual and semantic data, and patterns obtained from raw data pertaining to the IT infrastructure. The modeler 118 may use natural language processing (NLP) techniques to aggregate the information.

The SCK database 104 comprises a knowledge base for predicting occurrence of the events. Figure 2 illustrates exemplary constituents of the knowledge base 200, in accordance with some embodiments of the present disclosure. As shown in Figure 2, the knowledge base 200 is created by aggregating events 202, reasons 204-1, 204-2..., 204-N, and context and semantic data 206-1, 206-2.....206-N. The reasons 204-1, 204-2..., 204-N may collectively referred to as reasons 204. The context and semantic data 206-1, 206-2.....206-N may collectively be referred to as the context and semantic data 206.

As shown in figure 2, the events 202 is a table in the SCK database 104 comprising event information 208-1, 208-2,...208-N. The reasons 204 is a table comprising reason 210-1, 210-2,..., 210-N that caused the events. The reasons 204 also comprises a percentage (%) indicating how many time a particular reason has caused an event. The context and semantic data 206 comprises context and semantic determined by analyzing pattern of the information received from the IT infrastructure. In an example, the modeler 118 aggregates the events 202, the reasons 204, and the semantic and context data 208 to obtain the knowledge base 200, and thereby creating the SCK database 104.

Referring to Figure 1, once the unstructured input data is obtained by the modeler 118, the analyzer 120 may derive a seasonality activation function and a capacity activation function by analyzing the unstructured input data. In an example, the seasonality activation function comprises a static seasonality activation function and a dynamic seasonality activation function. The seasonality activation function indicates seasonal behavior of the events. In other words, the seasonality activation function indicates frequently occurring events with time intervals. The term "seasonality activation function" may thus be understood to mean a measure of how regularly the event occurs. The static seasonality activation function may indicate events that occur frequently because of known reasons with respect to known intervals of time. In other words, the static seasonality activation function may indicate events whose occurrences are regular. For example, usage of an automated teller machine (ATM) is generally high usage during first week of the month. This indicates static seasonal behavior of an event, which is high usage of the ATM machine. The dynamic seasonality activation function indicates event that occur unusually because of unusual reason with respect to time. In other words, the dynamic seasonality activation function may indicate events whose occurrences are irregular. For example, in case currency is not available in one ATM, then usage of other ATM, which is located in a nearby location, will be more.

The capacity activation function indicates capacity of components, such as hardware and applications that are present in the IT infrastructure and how the capacity of a particular component may cause an event. For example, a task of an ATM is to provide money to costumers. Performance of the ATM typically depends on components of an associated server, such as memory, central processing unit (CPU), and operating system (OS). Limited memory or processing requirement of the components may cause an event in the IT infrastructure. In an example, relation between the capacity and number of the events in the IT infrastructure may be represented by equation 1.

$$X = \frac{1}{Y} \dots\dots\dots\dots\dots\dots\dots\dots\dots\dots\dots\dots\dots\dots\dots\text{Equation 1}$$

The capacity (X) leads to the number of events (Y), and the X is inversely proportional to the Y. In this way, the term "capacity activation function" may be understood herein to provide a measure of the likelihood of an event occurring as a result of various operational limitations associated with the IT infrastructure.

Further, upon obtaining the seasonality activation function and the capacity activation function, the analyzer 120 may convert the unstructured input data into a time series data comprising a plurality of data points. The consecutive data points in the time series data are separated by a predefined time interval. In an example, the analyzer 120 may convert the unstructured input data into more than one time series data. In such cases, the predefined time interval for each of the time series data is unique.

The unstructured input data comprises various attributes and some attributes may not be relevant for predicting an event. These some attributes may consume computational time and power if considered for prediction of an event. The analyzer 120 may unique and correlated attributes to represents the events.

Thereafter, the analyzer 120 may create a library to preserve consistency in information extracted from the unstructured data. The library may include attributes selected by the analyzer 120. In an example, the attributes may include a hostname, an origin, an assignee group, an event type, and a severity against a time period associated with an event. The analyzer 120 may then assign a unique key to a value assigned to each of the attributes. Subsequently, the analyzer 120 may combining the unique key assigned to each of the attributes to create a unique ID. Further, each of the unique ID created may correspond to an event that occurred in the IT infrastructure.

Upon obtaining the unique ID, the analyzer 120 may convert the unstructured input data into a plurality of time series based on the unique ID. In an example, each of the plurality of time series has a different predefined time interval. In this manner, one or more time series data are obtained and each of the one or more time series data may provide different information which may help in predicting the events accurately.

One example of the time series data is given in Equation 2.

$$E_1, E_2, E_3, \ldots\ldots\ldots\ldots\ldots E_n \ldots\ldots\ldots\ldots\ldots\ldots\ldots\ldots\text{Equation 2}$$

Where $E_1$ is event against the predefined time interval one, $E_2$ is event again predefined time interval two, $E_3$ is event against the predefined time interval three and $E_n$ is event against predefined time interval n. In an example, the analyzer 120 may extract the events in different interval of time and below is the different interval to capture the time series knowledge in the form of bottom up approach. Points in the time series where the events are captured are referred to as data points. In other words, two data points in a time series data are separated by the predefined interval.

Interval 1← 1 to 60 sec (events/ second) to capture events in one second as an interval for learning.
Interval 2← 1 to 60 minute (events/ minute) to capture events in one minute as an interval for learning
Interval 3← 1 to 24 hour (events/ hour) to capture events in one hour as an interval for learning.
Interval 4← 1 to 30/(number of days in month) (events/ day) to capture events in one day as an interval for learning.
Interval 5← 1 to 12 month (events/month) to capture events in one month as an interval for learning.
Interval n← 1 to m standard interval (SI) (events/SI) to capture events in SI as an interval for learning.

In this manner, the analyzer 120 may extract "n" types of time series data, where each of the time series data has "m" number of data points. The "n" types of time series data allows information/feature extraction in a horizontal direction and the "m" number of data points allows information/feature extraction in a vertical direction. Thus, with the help of the different interval of time, the analyzer 120 captures different aspects of the time series for prediction of the events.

Once the at least one time series is obtained, the analyzer 120 may calculate a moving average for each of the plurality of data points associated with the at least one time series data with unique predefined time intervals. This way the analyzer 120 may compute the moving average along the vertical direction as explained above. Thereafter, the analyzer 120 may calculate a weighted moving average by aggregating the moving average calculated for each of the plurality of data points based on a predetermined weight. This way the analyzer 120 covers the event information spread along a horizontal direction of the time series data. The predefined weights associated with the data points may be determined based on learnings obtained from the SCK database 104. In an example, sum of all the predetermined weights associated with the data points of time series data is one. Further, in an example, if time series data are present, a predetermined weight of 0.7 may be assigned to the data points of a first time series data and a predetermined weight of 0.3 may assigned to the data points of the second time series data.

Thereafter, the prediction module 122 may predict occurrence of the event based on the weighted moving average, the seasonality activation function, and the capacity activation function. The prediction module 122 may store the prediction occurrence of an event in the prediction data 126. In one example, the prediction module 122 may store a list of predicted events and a tentative date when the event may occur in the prediction data 126.

In an example, the prediction module 122 may determine a future context activation function based on the historical context knowledge from the knowledge base 200. Subsequently, the prediction module 122 may use the future context activation function, the seasonality activation function, and the capacity activation function for prediction.

In one example, raw data, pertaining to an IT infrastructure, aggregated for six months may be considered for training the system 102. In said example, the system 102 may consider events occurred in first 3 months and reasons for the events as historical data and the next 3 months' events and reasons as target data. This may help in adjusting all activation functions, parameters and change time series data if require with respect to target data. After completing this exercise, the prediction module 122 may update the prediction based on the learning.

In another example, for continuous learning of the system 102 and updating the predicted events, the prediction module 122 may keep on tracking occurrence of events in the IT infrastructure after the prediction. Once a time frame for a predicted event is over, the prediction module 122 may determine actual events that occurred. Thereafter, the prediction module 122 may compare the actual events with predicted events to identify a deviation in prediction. The deviation may indicate the accuracy of the prediction. In case the deviation is more, the accuracy of the prediction will be less. The deviation may be then used by the prediction module 122 to update the SCK database 104, the seasonality activation function, the capacity activation function, the plurality of data points, the predetermined weight, or the time series data. Further, based on the deviation, the prediction module 122 may update the already may predictions stored in the prediction data 126. In this manner, the system 102 predicts events that are going to happen in the IT infrastructure and keeps on learning from the occurred events, which in turns increase the accuracy of the system 102. The prediction made by the system 102 may be provided to a user through a dashboard so that corrective action can be taken to mitigate occurrence of such events.

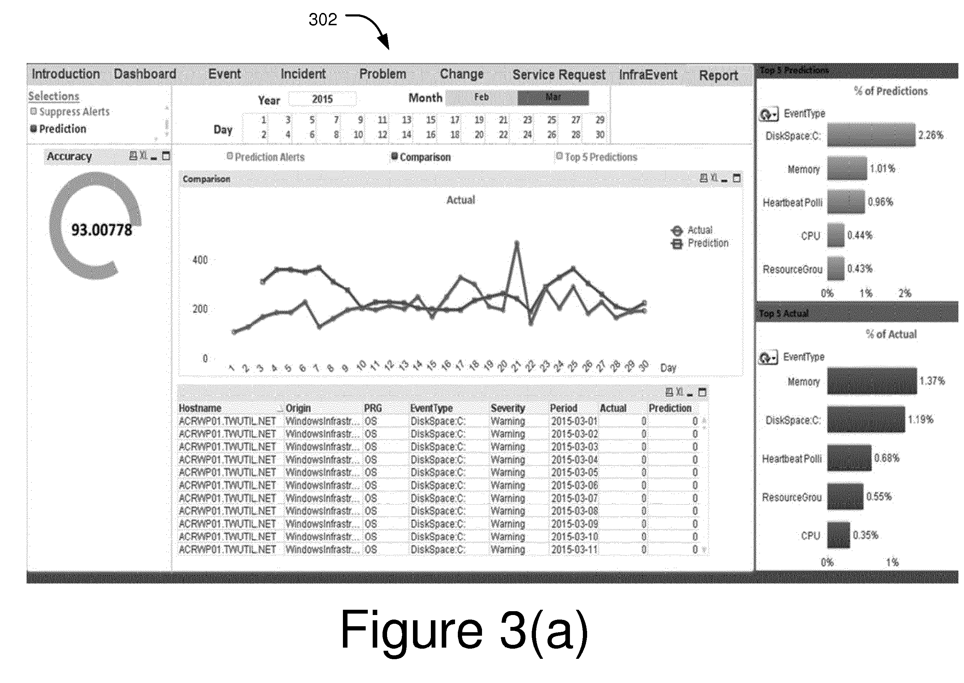

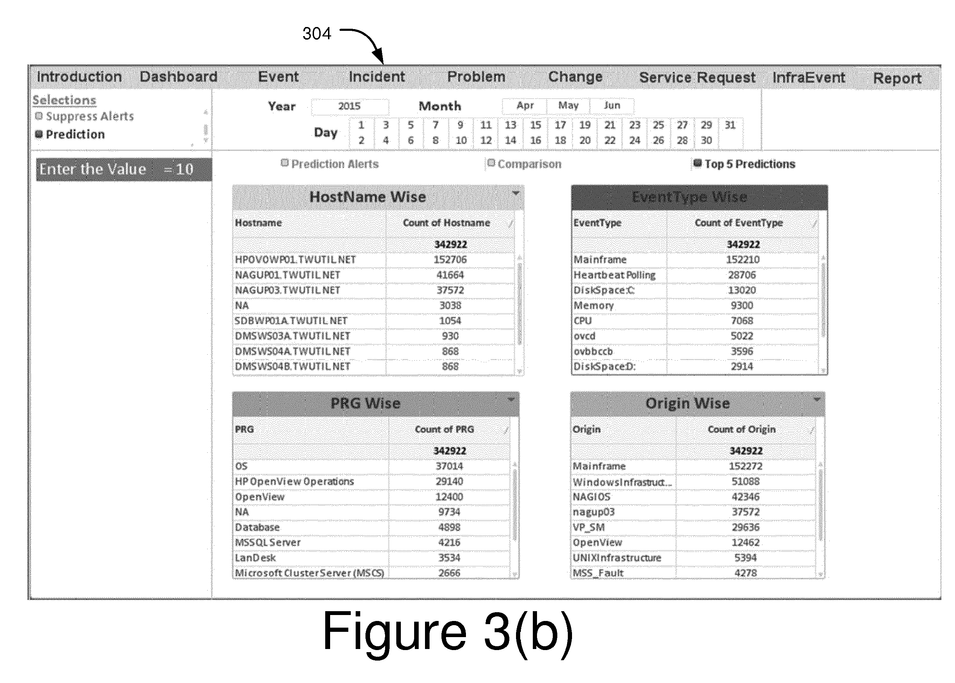

Figures 3(a) and 3(b) illustrate exemplary dashboards generated by the events prediction system 102, in accordance with some embodiments of the present disclosure. As shown in Figure 3(a), dashboard 302, generated by the system 102, displays information, such as a comparison tab comprising line graphs of actual and predicted results, top five predictions, actual, accuracy, and correlated attributes with respect to time of the system 102. Further, as shown in Figure 3(b), dashboard 304, generated by the system 102, displays prediction of event by attribute wise. In the dashboard 304, hostname wise, event type wise, assignee group (PRG) wise, and origin wise prediction of events are provided.

Thus, the system 102 disclosed by the present subject matter predicts occurrence of events in real-time so that the events that affects functioning of the IT infrastructure or have bad impact on the service provided by the IT infrastructure can be mitigated. The system 102 considers more than one time series data with different intervals of time to capture different aspects of the time series for prediction of the events. Further, the system 102 employs a reinforcement mechanism so that system 102 and predictions are continuously updated, if there is any deviation between the predicted events and the actual events.

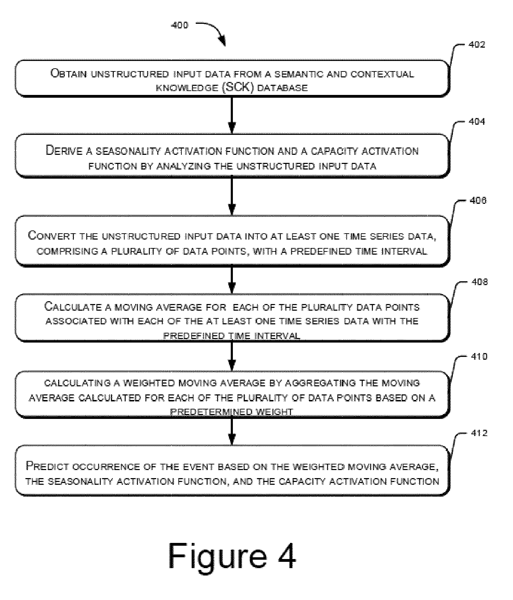

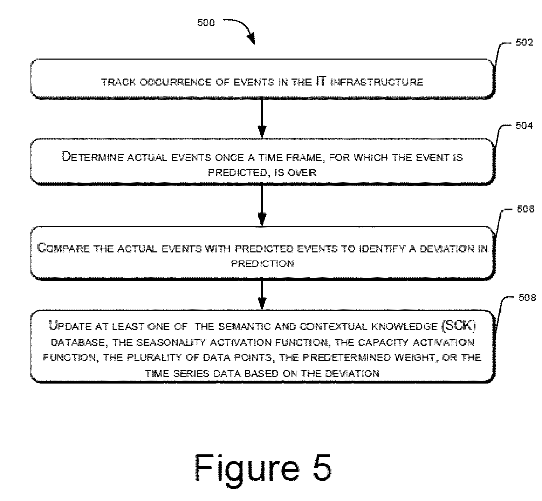

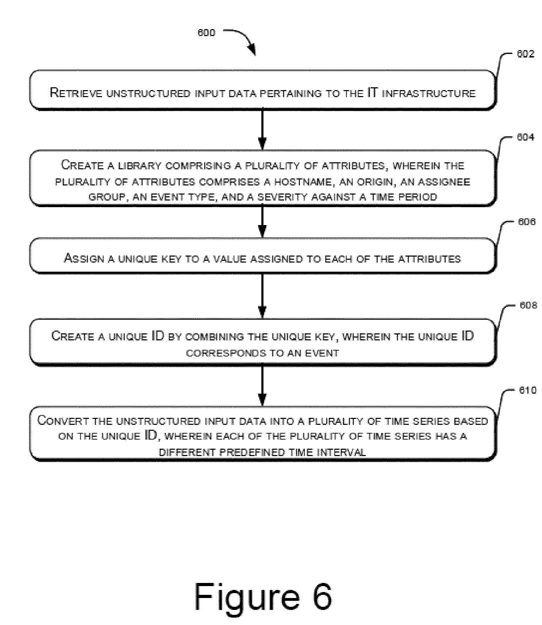

Figure 4 illustrates an exemplary method for predicting occurrence of an event in an IT infrastructure, in accordance with some embodiments of the present disclosure. Figure 5 illustrates an exemplary method for updating the knowledge base 200, in accordance with some embodiments of the present disclosure. Figure 6 illustrates an exemplary method for converting unstructured data into a plurality of time series data, in accordance with some embodiments of the present disclosure.

The methods 400, 500, and 600 may be described in the general context of computer executable instructions. Generally, computer executable instructions can include routines, programs, objects, components, data structures, procedures, modules, and functions, which perform particular functions or implement particular abstract data types. The methods 400, 500, and 600 may also be practiced in a distributed computing environment where functions are performed by remote processing devices that are linked through a communication network. In a distributed computing environment, computer executable instructions may be located in both local and remote computer storage media, including memory storage devices.

The order in which the methods 400, 500, and 600 are described is not intended to be construed as a limitation, and any number of the described method blocks can be combined in any order to implement the methods 400, 500, and 600 or alternative methods. Additionally, individual blocks may be deleted from the methods 400, 500, and 600 without departing from the scope of the subject matter described herein. Furthermore, the methods 400, 500, and 600 can be implemented in any suitable hardware, software, firmware, or combination thereof.

With reference to Figure 4, at block 402, unstructured input data is obtained from the SCK database 104. In an example, the unstructured input data may also be present within the system 102 and extracted from the input data 124 whenever prediction is to be made. The unstructured input data may comprise one or more events associated with a time that occurred in IT infrastructure, reasons for each of the at least one event, a percentage indicating how many times a particular reason has caused a particular event, number of reasons that have caused an event where the event is associated with more than one reason, or capacity of devices and/or applications that participated in an event. In an example, the modeler 118 may extract the unstructured input data from raw data received from the IT infrastructure.

At block 404, a seasonality activation function and a capacity activation function are derived by analyzing the unstructured input data. In an example, the analyzer 120 may analyze the unstructured input data to obtain the seasonality activation function and the capacity activation function. The seasonality activation function indicates a pattern or behavior in occurrence of the events. The capacity activation function indicates how capacity of the hardware and/or application leads to occurrence of an event. The seasonality activation function may include a static seasonality activation function and a dynamic seasonality activation function. Further, in an example, for predicting occurrence of an event, the prediction module 122 may use the seasonality activation function and the capacity activation function for prediction.

At block 406, the unstructured input data is converted into at least one time series data comprising a plurality of data points, where each of the plurality of data points is separated by a predefined time interval. In one example, the analyzer 120 module may convert the unstructured input data into the at least one time series data with plurality of data points. Conversion of the unstructured input data is discussed in conjunction with Figure 6. At block 408, a moving average for each of the plurality data points associated with each of the at least one time series data with the predefined time interval. In an example, the analyzer 120 may compute the moving average for the at least one time series data for each of the plurality data points. In this manner, the analyzer 120 may consider information spread along a vertical direction. Each of the at least one time series data has the predefined time interval and two consecutive data points are separated by the predefined time interval. The data point may also be referred to as a point in time series data where event information is aggregated for a particular instance of time.

At block 410, a weighted moving average is calculated by aggregating the moving average calculated for each of the plurality of data points based on a predetermined weight. In an example, the analyzer 120 may compute the weighted moving average for each of the time series data previously obtained for different data points to aggregate event information present in the horizontal direction of the time series. In an example, the predetermined weight is associated with each of the plurality of data points. The predetermined weights are obtained based on historical context data present in the SCK database 104. In an example, the prediction module 122 may update the seasonality activation function, the capacity activation function, the plurality of data points in each time series, the predetermined weights associated with the data points, if there is any deviation between actual events and predicted events. The actual events may be understood as the events that occurred at a particular time for which an event was predicted by the prediction module 122.

At block 412, occurrence of the event is predicted based on the moving average, the weighted moving average, the seasonality activation function, and the capacity activation function. In one example, the prediction module 122 may analyze the weighted moving average, the seasonality activation function and the capacity activation function to predict occurrence of the events in the IT infrastructure.

In one implementation, prediction module 122 may analyze the historical context knowledge from the knowledge base 200 to obtain a future context activation function. Thereafter, the prediction module 122 may use the future context activation function, the seasonality activation function, and the capacity activation function for prediction. Further, the prediction module 122 may store the predictions of the events in the prediction data 126.

Figure 5 illustrates an exemplary method for updating the knowledge base 200, in accordance with some embodiments of the present disclosure.

With reference to Figure 5, at block 502, occurrence of events in the IT infrastructure is tracked. In an example, once the predictions are made, the prediction module 122 may keep on tracking the events that are taking place in the IT infrastructure to verify the accuracy of the predictions and update the knowledge base 200 present in the SCK database 104.

At block 504, actual events are determined once a time frame, for which the event is predicted, is over. In an example, the prediction module 122 identifies the events that occurred at a time for which a prediction was made so that a comparison may be performed between the actual events and the predicted events.

At block 506, the actual events are compared with predicted events to identify a deviation in prediction. In an example, the prediction module 122 may compare the actual events with the predicted events to determine if there is any deviation. In case no deviation is there, the prediction module 122 may mark the prediction correct which increase the accuracy of the system 102. In case, the deviation is present between the actual results and the predicted results, the deviation may be used for leaning and reinforcing the system 102.

At block 508, at least one of the SCK database 104, the plurality of data points in each of the at least one time series data, the predetermined weight, or the time series data are updated based on the deviation. In an example, the prediction module 122 may update the predictions made by the system 102, which are yet to occur, and the SCK database 104. In an example, the prediction module 122 may use the deviation for updating the plurality of data points, the seasonality activation function, the capacity activation function, the predetermined weight and the time series data to improve the accuracy of the predictions.

Figure 6 illustrates an exemplary method for converting the unstructured data into a plurality of time series data, in accordance with some embodiments of the present disclosure.

With reference to Figure 6, at block 602, the unstructured input data pertaining to the IT infrastructure is retrieved. In an example, the modeler 118 module may receive the unstructured input data from the SCK database 104. In another example, the modeler 118 may receive the unstructured input data from the input data 124.

At block 604, a library comprising at least one attribute is created. In an example, the analyzer 120 may analyze the unstructured input data for extracting attributes that are correlated and may be useful in predicting the events. Upon extracting the attributes, the analyzer 120 may create the library comprising the attributes. In one example, the attributes may include a hostname, an origin, an assignee group, an event type, and a severity against a time period.

At block 606, a unique key is assigned to a value associated with each of the attributes. In an example, the analyzer 120 module may assign the unique key to the value assigned to each of the attributes.

At block 608, a unique ID is created by combining the unique key. In an example, the analyzer 120 may aggregate the unique key assigned to each of the attributes. Upon aggregation of the unique key, a unique ID is generated by the analyzer 120. Each of the unique ID will correspond to an event. In this manner, the unique ID is generated for each of the events.

At block 610, the unstructured input data is converted into a plurality of time series based on the unique ID. In an example, the analyzer 120 may convert the unstructured input data into the plurality of series, with the predefined time interval, based on the unique ID. In an example, each of the plurality of time series has a different predefined time interval so that every aspect of event information is captured.

Thus, the present subject matter discloses a method and a system 102 for predicting events in the IT infrastructure. The present subject matter creates a plurality of time series data with different intervals to cover every aspect of the events in the IT infrastructure. Further, the present subject matter considers the seasonality and the capacity while predicting the events. Furthermore, a self-learning mechanism is implemented in the system 102 which compares the actual events and the predicted events and updates the knowledge base 200 and parameters, considered while making the predictions, based on the comparison.

Computer System

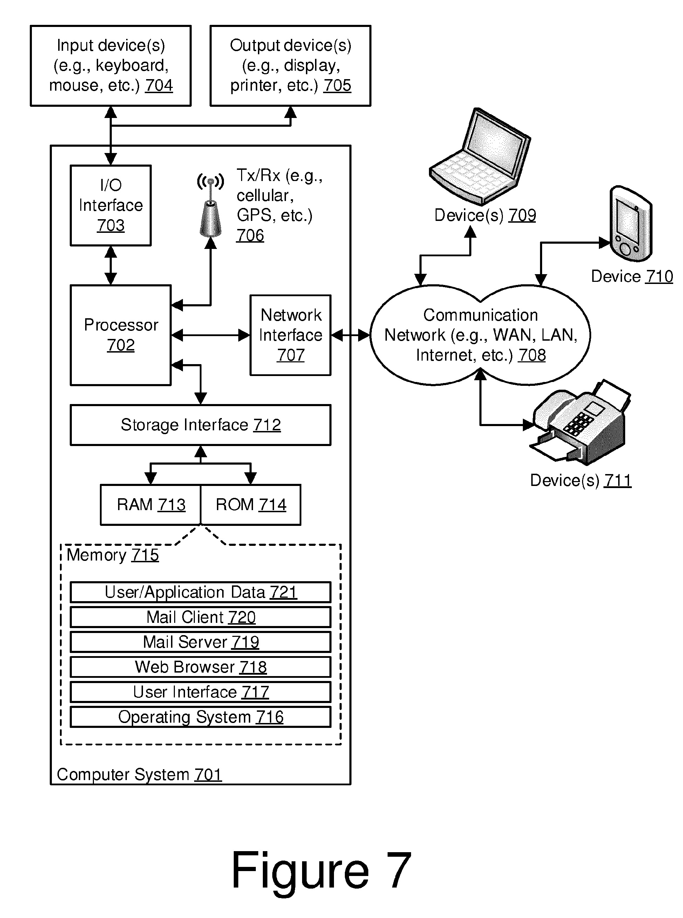

**FIG. 7** is a block diagram of an exemplary computer system for implementing embodiments consistent with the present disclosure. Variations of computer system 701 may be used for implementing the modeler 118, the analyzer 120, and the prediction module122 presented in this disclosure. Computer system 701 may comprise a central processing unit ("CPU" or "processor") 702. Processor 702 may comprise at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 702 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 702 may be disposed in communication with one or more input/output (I/O) devices via I/O interface 703. The I/O interface 703 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 703, the computer system 701 may communicate with one or more I/O devices. For example, the input device 704 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 705 may be a printer, fax machine, video display (e.g., cathode ray tube (CRT), liquid crystal display (LCD), light-emitting diode (LED), plasma, or the like), audio speaker, etc. In some embodiments, a transceiver 706 may be disposed in connection with the processor 702. The transceiver may facilitate various types of wireless transmission or reception. For example, the transceiver may include an antenna operatively connected to a transceiver chip (e.g., Texas Instruments WiLink WL1283, Broadcom BCM47501UB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 702 may be disposed in communication with a communication network 708 via a network interface 707. The network interface 707 may communicate with the communication network 708. The network interface may employ connection protocols including, without limitation, direct connect, Ethernet (e.g., twisted pair 10/100/1000 Base T), transmission control protocol/internet protocol (TCP/IP), token ring, IEEE 802.11 a/b/g/n/x, etc. The communication network 708 may include, without limitation, a direct interconnection, local area network (LAN), wide area network (WAN), wireless network (e.g., using Wireless Application Protocol), the Internet, etc. Using the network interface 707 and the communication network 708, the computer system 701 may communicate with devices 710, 711, and 712. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 701 may itself embody one or more of these devices.

In some embodiments, the processor 702 may be disposed in communication with one or more memory devices (e.g., RAM 713, ROM 714, etc.) via a storage interface 712. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory devices may store a collection of program or database components, including, without limitation, an operating system 716, user interface application 717, web browser 718, mail server 719, mail client 720, user/application data 721 (e.g., any data variables or data records discussed in this disclosure), etc. The operating system 716 may facilitate resource management and operation of the computer system 701. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 717 may facilitate display, execution, interaction, manipulation, or operation of program components through textual or graphical facilities. For example, user interfaces may provide computer interaction interface elements on a display system operatively connected to the computer system 701, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 701 may implement a web browser 718 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 701 may implement a mail server 719 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 701 may implement a mail client 720 stored program component. The mail client may be a mail viewing application, such as Apple Mail, Microsoft Entourage, Microsoft Outlook, Mozilla Thunderbird, etc.

In some embodiments, computer system 701 may store user/application data 721, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

The specification has described systems and methods predicting occurrence of an event in an IT infrastructure. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method for predicting occurrence of an event in an information technology infrastructure, comprising:

   obtaining unstructured input data from a semantic and contextual knowledge database;
   deriving a seasonality activation function and a capacity activation function by analyzing the unstructured input data;
   converting the unstructured input data into at least one time series data, comprising a plurality of data points, with a predefined time interval, wherein each of the plurality of data points is separated by the predefined time interval;
   calculating a moving average for each of the plurality data points associated with each of the at least one time series data with the predefined time interval;
   calculating a weighted moving average by aggregating the moving average calculated for each of the plurality of data points based on a predetermined weight, wherein the predetermined weight is associated with each of the plurality of data points; and
   predicting anoccurrence of the event based on the weighted moving average, the seasonality activation function, and the capacity activation function.

2. The method as claimed in claim 1, further comprises:

   tracking occurrence of events in the information technology infrastructure;
   determining actual events once a time frame, for which the event is predicted, is over,
   comparing the actual events with predicted events to identify a deviation in prediction; and
   updating at least one of the semantic and contextual knowledge database, the seasonality activation function, the capacity activation function, the plurality of data points, the predetermined weight, or the time series data based on the deviation.

3. The method as claimed in claim 1 or claim 2, wherein the unstructured input data comprises at least one event with respect to time that occurred in information technology infrastructure, reasons for each of the at least one event, a percentage indicating how many times a particular reason has caused a particular event, number of reasons that have caused an event where the event is associated with more than one reason, or capacity of devices and/or applications that participated in an event.

4. The method as claimed in any preceding claim, wherein the predefined time interval for each of the time series data is unique.

5. The method as claimed in any preceding claim, wherein the semantic and contextual knowledge database is created by natural language processing techniques to aggregate events, reasons causing the events, contextual and semantic data, and patterns obtained from raw data pertaining to the information technology infrastructure.

6. The method as claimed in any preceding claim, wherein the seasonality activation function comprises a static seasonality activation function and a dynamic seasonality activation function.

7. The method as claimed in any preceding claim, wherein the converting the unstructured input data into the at least one time series data further comprises:

   retrieving the unstructured input data pertaining to the information technology infrastructure;
   creating a library comprising a plurality of attributes, wherein the plurality of attributes comprises a hostname, an origin, an assignee group, an event type, and a severity against a time period;
   assigning a unique key to a value assigned to each of the attributes;
   creating a unique ID by combining the unique key, wherein the unique ID corresponds to an event; and
   converting the unstructured input data into a plurality of time series based on the unique ID, wherein each of the plurality of time series has a different predefined time interval.

8. An event prediction system for predicting occurrence of an event in an information technology information technology infrastructure, comprising:

a processor; and
a memory communicatively coupled to the processor, wherein the memory stores processor-executable instructions, which, on execution, causes the processor to perform operations comprising:

> obtaining unstructured input data from a semantic and contextual knowledge database;
> deriving a seasonality activation function and a capacity activation function by analyzing the unstructured input data;
> converting the unstructured input data into at least one time series data, comprising a plurality of data points, with a predefined time interval, wherein each of the plurality of data points is separated by the predefined time interval;
> calculating a moving average for each of the plurality data points associated with each of the at least one time series data with the predefined time interval;
> calculating a weighted moving average by aggregating the moving average calculated for each of the plurality of data points based on a predetermined weight; wherein the predetermined weight is associated with each of the plurality of data points; and
> predicting occurrence of the event based on the weighted moving average, the seasonality activation function, and the capacity activation function.

9. The system as claimed in claim 8, wherein operations further comprise:

> tracking occurrence of events in the information technology infrastructure;
> determining actual events once a time frame, for which the event is predicted, is over,
> comparing the actual events with predicted events to identify a deviation in prediction; and
> updating at least one of the semantic and contextual knowledge database, the seasonality activation function, the capacity activation function, the plurality of data points, the predetermined weight, or the time series data based on the deviation.

10. the system as claimed in claim 8 or claim 9, wherein the unstructured input data comprises at least one event with respect to time that occurred in information technology infrastructure, reasons for each of the at least one event, a percentage indicating how many times a particular reason has caused a particular event, number of reasons that have caused an event where the event is associated with more than one reason, or capacity of devices and/or applications that participated in an event.

11. The system as claimed in any one of claims 8 to 10, wherein the predefined time interval for each of the time series data is unique.

12. The system as claimed in any one of claims 8 to 11, wherein the semantic and contextual knowledge database is created by natural language processing techniques to aggregate events, reasons causing the events, contextual and semantic data, and patterns obtained from raw data pertaining to the information technology infrastructure.

13. The system as claimed in any one of claims 8 to 12, wherein the seasonality activation function comprises a static seasonality activation function and a dynamic seasonality activation function.

14. The system as claimed in any one of claims 8 to 13, wherein operations of converting the unstructured input data into the at least one time series data further comprises:

> retrieving the unstructured input data pertaining to the IT infrastructure;
> creating a library comprising a plurality of attributes, wherein the plurality of attributes comprises a hostname, an origin, an assignee group, an event type, and a severity against a time period;
> assigning a unique key to a value assigned to each of the attributes;
> creating a unique ID by combining the unique key, wherein the unique ID corresponds to an event; and
> converting the unstructured input data into a plurality of time series based on the unique ID, wherein each of the plurality of time series has a different predefined time interval.

15. A non-transitory computer-readable medium storing instructions for predicting occurrence of an event in an information technology infrastructure, wherein upon execution of the instructions by one or more processors, the processors perform the method of any one of claims 1 to 7.

EVENTS PREDICTING SYSTEM 102

PROCESSOR 108   MEMORY 110

INTERFACE(S) 112

MODULES 114

MODELER 118

ANALYZER 120

PREDICTION MODULE 122

DATA 116

INPUT DATA 124

PREDICTION DATA 126

100

SCK DATABASE 104

DATA SOURCE(S) 106

Figure 1

Figure 2

Figure 3(a)

Introduction  Dashboard  Event  Incident  Problem  Change  Service Request  InfraEvent  Report

Selections
○ Suppress Alerts
● Prediction

Year  2015  Month  Apr  May  Jun

Day  1  3  5  7  9  11  13  15  17  19  21  23  25  27  29  31
2  4  6  8  10  12  14  16  18  20  22  24  26  28  30

Enter the Value  = 10

○ Prediction Alerts          ○ Comparison          ● Top 5 Predictions

**HostName Wise**

| Hostname | Count of Hostname |
|---|---|
|  | 342922 |
| HPOVOWP01.TWUTIL.NET | 152706 |
| NAGUP01.TWUTIL.NET | 41664 |
| NAGUP03.TWUTIL.NET | 37572 |
| NA | 3038 |
| SDBWP01A.TWUTIL.NET | 1054 |
| DMSWS03A.TWUTIL.NET | 930 |
| DMSWS04A.TWUTIL.NET | 868 |
| DMSWS04B.TWUTIL.NET | 868 |

**EventType Wise**

| EventType | Count of EventType |
|---|---|
|  | 342922 |
| Mainframe | 152210 |
| Heartbeat Polling | 28706 |
| DiskSpace:C: | 13020 |
| Memory | 9300 |
| CPU | 7068 |
| ovcd | 5022 |
| ovbbccb | 3596 |
| DiskSpace:D: | 2914 |

**PRG Wise**

| PRG | Count of PRG |
|---|---|
|  | 342922 |
| OS | 37014 |
| HP OpenView Operations | 29140 |
| OpenView | 12400 |
| NA | 9734 |
| Database | 4898 |
| MSSQL Server | 4216 |
| LanDesk | 3534 |
| Microsoft Cluster Server (MSCS) | 2666 |

**Origin Wise**

| Origin | Count of Origin |
|---|---|
|  | 342922 |
| Mainframe | 152272 |
| WindowsInfrastruct... | 51088 |
| NAGIOS | 42346 |
| nagup03 | 37572 |
| VP_SM | 29636 |
| OpenView | 12462 |
| UNIXInfrastructure | 5394 |
| MSS_Fault | 4278 |

# Figure 3(b)

400

402

OBTAIN UNSTRUCTURED INPUT DATA FROM A SEMANTIC AND CONTEXTUAL KNOWLEDGE (SCK) DATABASE

404

DERIVE A SEASONALITY ACTIVATION FUNCTION AND A CAPACITY ACTIVATION FUNCTION BY ANALYZING THE UNSTRUCTURED INPUT DATA

406

CONVERT THE UNSTRUCTURED INPUT DATA INTO AT LEAST ONE TIME SERIES DATA, COMPRISING A PLURALITY OF DATA POINTS, WITH A PREDEFINED TIME INTERVAL

408

CALCULATE A MOVING AVERAGE FOR EACH OF THE PLURALITY DATA POINTS ASSOCIATED WITH EACH OF THE AT LEAST ONE TIME SERIES DATA WITH THE PREDEFINED TIME INTERVAL

410

CALCULATING A WEIGHTED MOVING AVERAGE BY AGGREGATING THE MOVING AVERAGE CALCULATED FOR EACH OF THE PLURALITY OF DATA POINTS BASED ON A PREDETERMINED WEIGHT

412

PREDICT OCCURRENCE OF THE EVENT BASED ON THE WEIGHTED MOVING AVERAGE, THE SEASONALITY ACTIVATION FUNCTION, AND THE CAPACITY ACTIVATION FUNCTION

# Figure 4

500

502

TRACK OCCURRENCE OF EVENTS IN THE IT INFRASTRUCTURE

504

DETERMINE ACTUAL EVENTS ONCE A TIME FRAME, FOR WHICH THE EVENT IS PREDICTED, IS OVER

506

COMPARE THE ACTUAL EVENTS WITH PREDICTED EVENTS TO IDENTIFY A DEVIATION IN PREDICTION

508

UPDATE AT LEAST ONE OF THE SEMANTIC AND CONTEXTUAL KNOWLEDGE (SCK) DATABASE, THE SEASONALITY ACTIVATION FUNCTION, THE CAPACITY ACTIVATION FUNCTION, THE PLURALITY OF DATA POINTS, THE PREDETERMINED WEIGHT, OR THE TIME SERIES DATA BASED ON THE DEVIATION

# Figure 5

600

602
RETRIEVE UNSTRUCTURED INPUT DATA PERTAINING TO THE IT INFRASTRUCTURE

604
CREATE A LIBRARY COMPRISING A PLURALITY OF ATTRIBUTES, WHEREIN THE PLURALITY OF ATTRIBUTES COMPRISES A HOSTNAME, AN ORIGIN, AN ASSIGNEE GROUP, AN EVENT TYPE, AND A SEVERITY AGAINST A TIME PERIOD

606
ASSIGN A UNIQUE KEY TO A VALUE ASSIGNED TO EACH OF THE ATTRIBUTES

608
CREATE A UNIQUE ID BY COMBINING THE UNIQUE KEY, WHEREIN THE UNIQUE ID CORRESPONDS TO AN EVENT

610
CONVERT THE UNSTRUCTURED INPUT DATA INTO A PLURALITY OF TIME SERIES BASED ON THE UNIQUE ID, WHEREIN EACH OF THE PLURALITY OF TIME SERIES HAS A DIFFERENT PREDEFINED TIME INTERVAL

# Figure 6

Figure 7

Europäisches
Patentamt

European
Patent Office

Office européen
des brevets

## EUROPEAN SEARCH REPORT

Application Number

EP 15 20 1799

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/060015 A1 (SAMSUNG SDS CO LTD [KR]; KIM BYUNG SEOP [KR]; LEE CHI HOON [KR]; PARK) 22 May 2008 (2008-05-22) <br> * paragraph [0001] - paragraph [0002] * <br> * paragraph [0041] - paragraph [0053] * <br> * paragraph [0059] - paragraph [0063] * <br> * figure 1 * | 1-15 | INV. <br> G06Q10/00 <br> G06Q10/04 <br> G06Q10/06 |
| X | US 2005/096953 A1 (WASHINGTON KEITH [US] ET AL) 5 May 2005 (2005-05-05) <br> * paragraph [0023] - paragraph [0034] * <br> * paragraph [0066] - paragraph [0074] * <br> * figures 1,7,9 * | 1-15 | |
| X | US 7 107 339 B1 (WOLTERS TIMOTHY JEROME [US]) 12 September 2006 (2006-09-12) <br> * column 1, line 14 - column 1, line 20 * <br> * column 3, line 1 - column 4, line 33 * <br> * figures 1,2 * | 1-15 | |
| X | US 2011/313812 A1 (DUVVOORI VIKRAM [US] ET AL) 22 December 2011 (2011-12-22) <br> * paragraph [0001] - paragraph [0003] * <br> * paragraph [0024] - paragraph [0024] * <br> * paragraph [0034] - paragraph [0040] * <br> * paragraph [0113] - paragraph [0118] * <br> * figures 1,2,9 * | 1-15 | TECHNICAL FIELDS SEARCHED (IPC) <br><br> G06Q |
| X | US 2013/318022 A1 (YADAV REENA DAYAL [IN] ET AL) 28 November 2013 (2013-11-28) <br> * paragraph [0001] - paragraph [0001] * <br> * paragraph [0021] - paragraph [0027] * <br> * paragraph [0033] - paragraph [0039] * <br> * paragraph [0046] - paragraph [0046] * <br> * figures 1,2 * | 1-15 | |

-/--

The present search report has been drawn up for all claims

| Place of search | Date of completion of the search | Examiner |
|---|---|---|
| Munich | 22 February 2016 | Melis, Caterina |

EPO FORM 1503 03.82 (P04C01)

Europäisches
Patentamt

European
Patent Office

Office européen
des brevets

## EUROPEAN SEARCH REPORT

Application Number

EP 15 20 1799

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/067410 A1 (KUMAR ROHIT [IN] ET AL) 5 March 2015 (2015-03-05) <br> * paragraph [0001] - paragraph [0001] * <br> * paragraph [0009] - paragraph [0010] * <br> * paragraph [0019] - paragraph [0024] * <br> * paragraph [0038] - paragraph [0044] * <br> * figures 1,2 * <br> ----- | 1-15 | |

TECHNICAL FIELDS
SEARCHED      (IPC)

The present search report has been drawn up for all claims

| Place of search | Date of completion of the search | Examiner |
|---|---|---|
| Munich | 22 February 2016 | Melis, Caterina |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 20 1799

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2016

| Patent document cited in search report | | Publication date | Patent family member(s) | | Publication date |
|---|---|---|---|---|---|
| WO 2008060015 | A1 | 22-05-2008 | CN | 101632093 A | 20-01-2010 |
| | | | JP | 2010526352 A | 29-07-2010 |
| | | | KR | 20080044508 A | 21-05-2008 |
| | | | US | 2010082708 A1 | 01-04-2010 |
| | | | WO | 2008060015 A1 | 22-05-2008 |
| US 2005096953 | A1 | 05-05-2005 | NONE | | |
| US 7107339 | B1 | 12-09-2006 | US | 7107339 B1 | 12-09-2006 |
| | | | US | 2007005761 A1 | 04-01-2007 |
| US 2011313812 | A1 | 22-12-2011 | US | 2011313812 A1 | 22-12-2011 |
| | | | US | 2012290543 A1 | 15-11-2012 |
| | | | WO | 2011159984 A1 | 22-12-2011 |
| US 2013318022 | A1 | 28-11-2013 | NONE | | |
| US 2015067410 | A1 | 05-03-2015 | NONE | | |

EPO FORM P0459

For more details about this annex : see Official Journal of the European Patent Office, No. 12/82